# EUROPÄISCHE PATENTSCHRIFT

(11) **EP 1 172 549 B1**
(45) Veröffentlichungstag und Bekanntmachung des Hinweises auf die Patenterteilung: **17.03.2004**
(21) Anmeldenummer: 01115604.9
(22) Anmeldetag: 02.07.2001
(51) Int. Cl.: F02M 37/22

(54) **Kraftstofffilter**
Fuel filter
Filtre à carburant

(30) Priorität: 15.07.2000 DE 10034488
(43) Veröffentlichungstag der Anmeldung: 16.01.2002
(73) Patentinhaber: Mann + Hummel GmbH, 71638 Ludwigsburg (DE)
(72) Erfinder: Jokschas, Günter, 71540 Murrhardt (DE)
(74) Vertreter: Voth, Gerhard, Dipl.-Ing.

(56) Entgegenhaltungen:
- DE-A- 3 701 259
- DE-A- 19 804 549
- DE-U- 9 211 438
- GB-A- 2 129 329
- US-A- 3 768 659

## Beschreibung

Die Erfindung betrifft einen Kraftstofffilter nach dem Oberbegriff des Patentanspruches 1.

Es ist aus der DE 198 04 549 ein Kraftstofffilter, insbesondere für Dieselkraftstoff bekannt, welcher durch ein Filtergehäuse mit einem Zulaufanschluss und einem Ablaufanschluss gebildet wird. In dem Gehäuse ist ein Filtereinsatz angeordnet, welcher eine Rohseite von einer Reinseite dichtend trennt. Im unteren Teil des Gehäuses ist ein Wasserspeicherraum vorgesehen, welcher abgeschiedenes Wasser aus dem Kraftstoff aufnehmen kann. In diesen Wasserspeicherraum ragt ein Wassersensor. Das Wasser ist über ein von außen mechanisch betätigbares Ventil, welches einen Wasserablauf öffnet oder verschließt, aus dem Wasserspeicher entfernbar. Das Ventil ist am Gehäuseboden angeordnet und wird mit einem Kabelzug betätigt, welcher außerhalb des Filtergehäuses im Bereich des Gehäusebodens angeordnet ist.

Nachteilig an dieser Ausführung ist der Platzbedarf des Ventils außerhalb des Filtergehäuses. Beim Einbau eines Kraftstofffilters in ein Kraftfahrzeug steht nur ein begrenzter Einbauraum zur Verfügung, welcher im Allgemeinen durch das Filtergehäuse ausgefüllt wird. Außerdem benötigt der Kabelzug eine Bewegungseinheit, welche ebenfalls einen Einbauraum benötigt. Weiterhin wird das Ventil durch viele Einzelteile gebildet, wodurch die Herstellung des Ventils teuer wird.

Aufgabe der Erfindung ist die Schaffung eines Kraftstofffilters, mit einem Wasserablauf, welcher einen kleinen Einbauraum benötigt. Diese Aufgabe wird durch die Merkmale des Patentanspruches 1 gelöst.

Der erfindungsgemäße Kraftstofffilter dient der Reinigung eines Kraftstoffes, insbesondere von Dieselkraftstoff, wobei Wasser, welches in dem Kraftstoff enthalten ist, abgeschieden wird. Der Kraftstofffilter weist hierzu ein Filtergehäuse mit einem Filterkopf und einem Gehäusetopf auf, wobei die Gehäuseteile unlösbar durch z.B. verbördeln oder lösbar durch z.B. verschrauben miteinander verbunden sein können. An dem Filtergehäuse ist ein Kraftstoffeinlass und ein Kraftstoffauslass vorgesehen. Bei besonderen Ausführungen ist der Kraftstoffeinlass und der Kraftstoffauslass an dem Filterkopf angeordnet. Der Gehäusetopf enthält einen Wasserspeicherraum, in welchem sich das abgeschiedene Wasser ansammeln kann. An dem Gehäusetopf, insbesondere im Bereich des Wasserspeicherraumes, ist ein Wasserablauf angeordnet, wobei der Wasserspeicherraum korrespondierend mit dem Wasserablauf verbunden ist. Der Wasserablauf kann an beliebigen Stellen des Gehäusetopfes angeordnet sein, wobei es sinnvoll ist, den Wasserablauf an der tiefsten Stelle des Gehäusetopfes anzuordnen, wodurch das Wasser, welches sich am Topfboden ansammelt, am Einfachsten aus dem Kraftstofffilter entfernt werden kann.

Der Kraftstofffilter enthält ein zylindrisches Filterelement, welches ein Filtermedium aufweist. Das Filtermedium kann z.B. ein Filterpapier oder ein Filtervlies sein, wobei das Filtermedium z.B. gefaltet, gewickelt oder flach ausgeführt sein kann. Das Filterelement ist derart in das Filtergehäuse eingebracht, dass es eine Rohseite dichtend von einer Reinseite trennt, wobei die Rohseite mit dem Kraftstoffeinlass und die Reinseite mit dem Kraftstoffauslass verbunden ist. Je nachdem, wie das Filtergehäuse ausgeführt ist, kann bei einem verschmutzten Filterelement nur das Filterelement oder der ganze Kraftstofffilter ausgetauscht werden.

Weiterhin enthält der Kraftstofffilter eine Wasserablassvorrichtung, mit welcher der Wasserablauf in dem Gehäusetopf über ein Betätigungselement von außen mechanisch öffenbar ist. Hierbei ist das Betätigungselement einerseits mit dem Filterkopf und andererseits mit dem Wasserablauf korrespondierend verbunden. Das Betätigungselement verläuft im Innern des Kraftstofffilters, wodurch außen am Kraftstofffilter keine störenden Elemente angeordnet sind. Dies ist vorteilhaft, da der Kraftstofffilter auch in kleinen, schlecht zugänglichen Einbauräumen angeordnet werden kann. Weiterhin enthält die Wasserablassvorrichtung ein Verschlusselement, welches den Wasserablauf dichtend verschließen kann und mit dem Betätigungselement korrespondierend verbunden ist, sowie eine Bewegungseinheit, mit welcher das Betätigungselement bewegbar ist. Die Bewegungseinheit kann z.B. als Ziehgriff, Hebel, Druckknopf oder Öse ausgebildet sein.

Sobald sich eine bestimmte Wassermenge in dem Wasserspeicherraum angesammelt hat, wird die Bewegungseinheit von außen mechanisch bewegt, dadurch bewegt sich das Betätigungselement, sowie das Verschlusselement und der Wasserablauf wird frei gegeben. Das Betätigungselement kann linear oder rotatorisch bewegt werden. Nachdem das Wasser entfernt ist, verschließt das Verschlusselement den Wasserablauf wieder. Der Zeitpunkt, wann das Verschlusselement den Wasserablauf wieder verschließt, kann von außen beeinflussbar sein, z.B. je nachdem, wie lange die Bewegungseinheit in einer Offenstellung gehalten wird. Es kann aber auch eine Zeitvorgabe definiert sein, welche von außen nicht beeinflussbar ist oder eine variable Zeitvorgabe, welche in Abhängigkeit von Umgebungseinflüssen die Bewegungseinheit steuert.

Gemäß einer weiteren Ausgestaltung der Erfindung ist ein Wassersensor in dem Filtergehäuse angeordnet. Der Wassersensor kann beliebig in dem Filtergehäuse angeordnet sein. Hierbei stellt die Anordnung des Wassersensors am Topfboden oder am Filterkopf eine besondere Variante dar. Mit Hilfe des Wassersensors kann der Zeitpunkt, wann das Wasser aus dem Kraftstofffilter entfernt werden muss, exakt bestimmt werden, wodurch Wasserstandskontrollen im Kraftstofffilter überflüssig werden.

Bei einer vorteilhaften Ausbildung der Erfindung verläuft das Betätigungselement durch einen, von dem zylindrischen Filterelement gebildeten Filterinnenraum. Wodurch eine Anordnung des Betätigungselementes am oberen Ende des Gehäuses, und somit eine einfachere Bedienung ermöglicht wird. Hierbei ist es vorteilhaft, wenn der Wasserablauf und das Betätigungselement koaxial zu der Mittelachse des Kraftstofffilters angeordnet sind. Bei dieser Ausbildung verläuft das Betätigungselement sowohl durch die Reinseite, als auch durch die Rohseite, daher sind geeignete Maßnahmen zu ergreifen, dass entlang des Betätigungselementes keine Leckage zwischen der Rohseite und der Reinseite erfolgt. Geeignete Maßnahmen eine Leckage zu verhindern stellen z.B. Dichtungen, welche dichtend mit dem Filterelement und dem Betätigungselement verbunden sind dar. Es kann aber auch das Filterelement derart ausgestaltet sein, dass es dichtend an dem Betätigungselement anliegt, wodurch eine Leckage vermieden wird. Jedoch ist sicherzustellen, dass das Betätigungselement noch bewegbar ist.

Es ist vorteilhaft, dass der Wasserablauf durch eine axiale Bewegung des Betätigungselementes öffenbar ist. Hierbei kann das Betätigungselement als Druckstange ausgebildet sein, welche das Verschlusselement von dem Wasserablauf abhebt und das Wasser abfließen lässt. Das Verschlusselement, welches von außen den Wasserablauf verschließen kann, ist mit einer ausreichenden Vorspannkraft auf den Wasserablauf gedrückt, damit der Wasserablauf nicht durch einen zu großen Innendruck geöffnet werden kann.

Gemäß einer weiteren Ausgestaltung der Erfindung ist der Wasserablauf durch Ziehen an dem Betätigungselement öffenbar. Das Betätigungselement ist derart ausgebildet, dass es Zugkräfte übertragen kann. Hierbei kann es z.B. als Zugstange oder Seil ausgebildet sein. Bei dieser Ausgestaltung kann das Verschlusselement im Innern des Kraftstofffilters angeordnet sein und durch den Flüssigkeitsdruck im Kraftstofffilter auf den Wasserablauf gedrückt werden. Hierbei ist dann nur eine geringe axiale Bewegung der Bestätigungselemente erforderlich, um den Wasserablauf zu öffnen. Die Zugkraft kann z.B. von Hand auf das Betätigungselement ausgeübt werden.

Eine vorteilhafte Variante der Erfindung sieht ein Getriebe zur Erzeugung der axialen Bewegung des Betätigungselementes vor. Hierbei kann die Betätigungseinheit durch ein Hebelgetriebe, insbesondere eine Wippe oder ein Zahnradgetriebe bewegt werden. Bei einem Hebelgetriebe können mehrere Hebel zur Umsetzung einer eingeleiteten Kraft in eine axiale Bewegung dienen. Hierbei kann eine feste Lagerstelle als Umlenkpunkt der eingeleiteten Kraft dienen, wobei z.B. eine Druckkraft in eine Zugkraft umgesetzt wird. Weiterhin kann das Getriebe auch als Übersetzungsgetriebe ausgelegt sein, welches eine kleine Bewegung der Bewegungseinheit in eine größere Bewegung des Betätigungselementes oder eine große Bewegung der Bewegungseinheit in eine kleine Bewegung des Betätigungselementes übersetzt. Bei einem Zahnradgetriebe kann das Betätigungselement eine Zahnstange oder ein Zahnrad aufweisen, wobei das Betätigungselement durch ein weiteres Zahnrad angetrieben werden kann. Je nach Ausführung bewegt sich das Betätigungselement axial oder radial. Somit besteht ein großer Gestaltungsspielraum, welcher eine optimale Anpassung an den Einsatzort zu lässt.

Gemäß einer weiteren Ausgestaltung der Erfindung ist das Getriebe verriegelbar. Hierbei kann das Getriebe mit einer Arretierung ausgestattet sein, welche im verriegelten Zustand ein unkontrolliertes Bewegen des Getriebes und somit ein unkontrolliertes Öffnen des Wasserablaufes verhindert. Im entriegelten Zustand ist das Getriebe bewegbar, wodurch das Verschlusselement von dem Wasserablauf abhebbar ist und das Wasser entweichen kann.

Eine besondere Ausführung der Erfindung sieht vor, dass der Wasserablauf automatisch öffen- und schließbar ist, wobei die Wasserablassvorrichtung angesteuert ist. Eine Möglichkeit der Automation ist die Verbindung des Wassersensors mit dem Betätigungselement, wodurch das Wasser ohne Eingriff eines Bedieners abgelassen werden kann. Der Wassersensor meldet z.B. dass das Wasser einen definierten Füllstand überschritten hat, wodurch das Betätigungselement durch die Bewegungseinheit in seiner Lage verändert wird und das Verschlusselement den Wasserablauf frei gibt. Nachdem das Wasser einen definierten Mindestfüllstand, welcher derart definiert ist, dass noch kein Kraftstoff in den Wasserablauf gelangt, unterschreitet, wird das Betätigungselement wieder in die Geschlossenstellung bewegt, wodurch das Verschlusselement den Wasserablauf wieder verschließt. Somit reduziert sich der manuelle Wartungsaufwand.

Diese und weitere Merkmale von bevorzugten Weiterbildungen der Erfindung gehen außer aus den Ansprüchen auch aus der Beschreibung und den Zeichnungen hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

Ein Ausführungsbeispiel der Erfindung wird nachfolgend anhand der Zeichnungen erläutert.

Hierbei zeigt
- Figur 1: einen Kraftstofffilter im Schnitt, und
- Figur 2: einen Ausschnitt Z aus Figur 1.

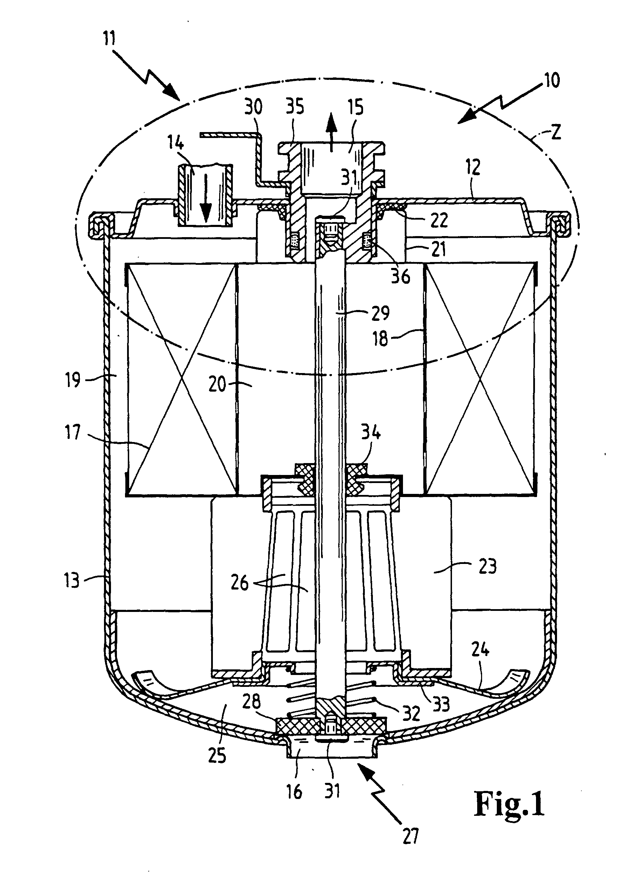

In Figur 1 ist ein Kraftstofffilter 10 im Schnitt dargestellt. Der Kraftstofffilter 10 weist ein Filtergehäuse 11 auf, welches durch einen Filterkopf 12 und einen Gehäusetopf 13 gebildet wird. Der Filterkopf 12 ist bei diesem Ausführungsbeispiel mit dem Gehäusetopf 13 dichtend verbörtelt. Bei anderen Ausführungen sind jedoch auch lösbare Verbindungen des Filterkopfes 12 mit dem Gehäusetopf 13 denkbar. Der Filterkopf 12 weist einen Kraftstoffeinlass 14 und einen Kaftstoffauslass 15 auf. Der Gehäusetopf 13 besitzt einen bodenseitig, zentral angeordneten Wasserablauf 16.

In dem Gehäusetopf 13 ist ein zylindrisches Filterelement 17 eingebracht, welches zick-zack-förmig gefaltet ist. Das Filterelement 17 ist bei dieser Ausführung von außen nach innen durchströmt. Damit sich das Filterelement 17 beim Durchströmen nicht verformt, ist ein Stützrohr 18 vorgesehen, an welchem sich das Filterelement 17 abstützen kann. Der Gehäusetopf 13 umschließt eine Rohseite 19, welche durch das Filterelement 17 dichtend von einer Reinseite 20 getrennt ist. Die Rohseite 19 ist korrespondierend mit dem Kraftstoffeinlass 14 und die Reinseite 20 korrespondierend mit dem Kraftstoffauslass 15 verbunden.

Zur Fixierung der Lage des Filterelementes 17 in dem Filtergehäuse 11 ist ein oberes Distanzstück 21 vorgesehen, welches das Filterelement 17 an dem Filterkopf 12 abstützt. Damit in diesem Bereich keine Leckage zwischen der Rohseite 19 und der Reinseite 20 auftritt, ist zwischen dem oberen Distanzstück 21 und dem Filterkopf 12 eine Dichtung 22 eingebracht. Weiterhin weist der Kraftstofffilter 10 ein unteres Distanzstück 23 auf, welches über ein Zwischenblech 24 an dem Gehäusetopf 13 abgestützt ist.

In dem Gehäusetopf 13 ist auf der Rohseite 19 ein Wasserspeicherraum 25 angeordnet. Das Wasser sammelt sich vor dem Filterelement 17 auf der Rohseite 19 an und sinkt ab. Das untere Distanzstück 23 weist Unterbrechungen 26 auf, durch welche das Wasser in den Wasserspeicherraum 25 gelangen kann.

Der Kraftstofffilter 10 besitzt eine, auf der Zylinderachse angeordnete Wasserablassvorrichtung 27, welche ein dichtringförmiges Verschlusselement 28, ein Betätigungselement 29 und eine Bewegungseinheit 30 aufweist. Das Verschlusselement 28 verschließt den Wasserablass 16 im geschlossenen Zustand dichtend und ist mit dem Betätigungselement 29 durch eine Niete 31 verbunden. Das Verschlusselement 28 ist durch eine vorgespannte Schraubenfeder 32 auf den Wasserablauf gedrückt, wobei sich die Schraubenfeder 32 am einem Abstützblech 33 abstützt. Das Abstützblech 33 liegt an dem Zwischenblech 24 an. Das Betätigungselement 29 verläuft koaxial zu der Zylinderachse des Gehäuses, wobei es das untere Distanzstück 23, das Filterelement 17 und das obere Distanzstück 21 durchdringt. Da das Betätigungselement 29 sowohl mit der Rohseite 19 als auch mit der Reinseite 20 in Kontakt steht, ist eine Formdichtung 34 vorgesehen, welche dichtend mit dem Filterelement 17 und dem Betätigungselement 29 verbunden ist. Das Betätigungselement 29 ist jedoch axial in der Formdichtung 34 verschiebbar. An der, dem Verschlusselement 28 gegenüberliegenden Seite des Betätigungselementes 29 ist ein Anschlussstück 35 mit dem Betätigungselement 29 durch eine Niete 31 verbunden. Das Anschlussstück 35 ragt in den Filterkopf 12 hinein und ist derart ausgebildet, dass es den Kraftstoffauslass 15 umschließt und mit der Bewegungseinheit 30 verbunden ist, wobei das Anschlussstück 35 axial bewegbar ist. Damit zwischen dem Anschlussstück 35 und dem Filterkopf 12 kein Kraftstoff austreten kann, ist ein Dichtungsring 36 an dem Anschlussstück 35 angeordnet.

Zum Öffnen des Wasserablaufes 16 muss man an der Bewegungseinheit 30 axial nach oben ziehen, dadurch bewegt sich das Anschlussstück 35, das Betätigungselement 29 und das Verschlusselement 28 axial nach oben und der Wasserablauf wird frei gegeben. Sobald keine Zugkraft mehr auf die Bewegungseinheit 30 ausgeübt wird, drückt die Spiralfeder 32 das Verschlusselement 28 wieder auf den Wasserablauf 16 und verschließt ihn dichtend.

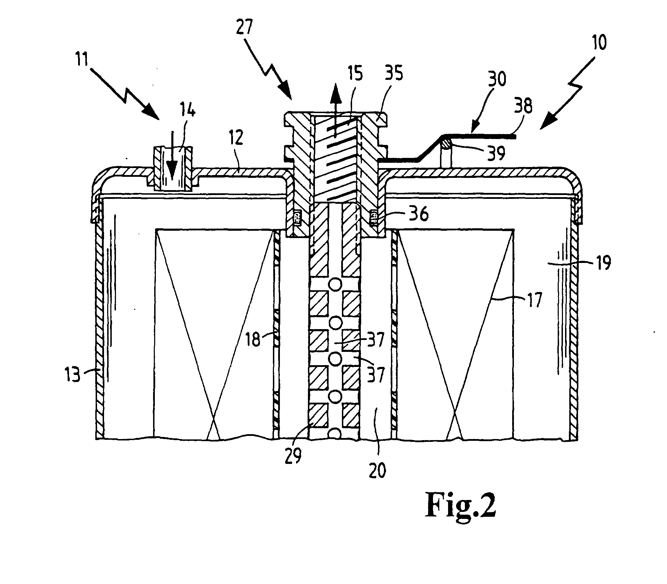

In Figur 2 ist ein Ausschnitt Z gemäß Figur 1 im Schnitt dargestellt, wobei die Wasserablassvorrichtung 27 und das Filtergehäuse 11 in einer anderen Ausführung dargestellt ist. Der Figur 1 entsprechende Bauteile sind mit gleichen Bezugszeichen versehen. Das Filtergehäuse 11 wird durch einen Filterkopf 12 und einen Gehäusetopf 13 gebildet, wobei die Gehäuseteile 12, 13 miteinander lösbar verschraubt sind. Bei diesem Ausführungsbeispiel weist das Betätigungselement 29 im Bereich der Reinseite 20 Kraftstoffkanäle 37 auf, durch welche der gereinigte Kraftstoff zu dem Kraftstoffauslass 15 gelangt. Das Betätigungselement 29 ist in das Anschlussstück 35 eingeschraubt, wodurch die axiale Bewegung übertragen werden kann. Die Bewegungseinheit 30 ist als Hebelgetriebe ausgeführt, wobei ein Hebel 38 mit dem Anschlussstück 35 verbunden ist. Weiterhin weist die Bewegungseinheit 30 eine Lagerstelle 39 auf, auf welcher der Hebel 38 aufliegt. Durch Drücken auf das Hebelende wird die Druckkraft umgelenkt und das Betätigungselement 29 axial nach oben bewegt. Sobald kein Druck mehr auf den Hebel wirkt, zieht die Spiralfeder 32 (nicht dargestellt) wie in Figur 1 beschrieben das Betätigungselement 29 wieder nach unten.

## Patentansprüche

1. Kraftstofffilter (10), insbesondere für Dieselkraftstoff, aufweisend
- ein Filtergehäuse (11) mit einem Filterkopf (12) und einem Gehäusetopf (13), wobei an dem Filtergehäuse (11) ein Kraftstoffeinlass (14) und ein Kraftstoffauslass (15) angeordnet ist, und wobei in dem Gehäusetopf (13) ein Wasserspeicherraum (25) vorgesehen ist, welcher mit einem Wasserablauf (16) korrespondierend verbunden ist,
- ein zylindrisches Filterelement (17), welches derart in das Filtergehäuse (11) eingebracht ist, dass eine Rohseite (19), welche mit dem Kraftstoffeinlass (14) korrespondierend verbunden ist, dichtend von einer Reinseite (20), welche mit dem Kraftstoffauslass (15) korrespondierend verbunden ist, getrennt ist,
- eine Wasserablassvorrichtung (27), mit welcher der Wasserablauf (16) in dem Gehäusetopf (13) über ein Betätigungselement (29) von außen mechanisch öffenbar ist,
**dadurch gekennzeichnet, dass** das Betätigungselement (29) einerseits mit dem Filterkopf (12) und andererseits mit dem Wasserablauf (16) korrespondierend verbunden ist.

2. Kraftstofffilter (10) nach Anspruch 1, **dadurch gekennzeichnet, dass** ein Wassersensor (24) in dem Filtergehäuse (11) angeordnet ist.

3. Kraftstofffilter (10) nach einem der Ansprüche 1 oder 2, **dadurch gekennzeichnet, dass** das Betätigungselement (29) durch einen, von dem zylindrischen Filterelement (17) gebildeten Filterinnenraum (22) verläuft.

4. Kraftstofffilter (10) nach einem der vorangehenden Ansprüche, **dadurch gekennzeichnet, dass** der Wasserablauf (16) durch eine axiale Bewegung des Betätigungselementes (29) öffenbar ist.

5. Kraftstofffilter (10) nach Anspruch 4, **dadurch gekennzeichnet, dass** der Wasserablauf (16) durch Ziehen an dem Betätigungselement (29) öffenbar ist.

6. Kraftstofffilter (10) nach Anspruch 4 oder 5, **dadurch gekennzeichnet, dass** die axiale Bewegung des Betätigungselementes (29) durch ein Getriebe (23) erzeugt ist.

7. Kraftstofffilter (10) nach Anspruch 6, **dadurch gekennzeichnet, dass** das Getriebe (23) verriegelbar ist.

8. Kraftstofffilter (10) nach einem der vorangehenden Ansprüche, **dadurch gekennzeichnet, dass** der Wasserablauf (16) automatisch öffen- und schließbar ist, wobei die Wasserablassvorrichtung (27) angesteuert ist.

## Claims

1. Fuel filter (10), more especially for diesel fuel, including
- a filter housing (11) with a filter head (12) and a housing container (13), a fuel inlet (14) and a fuel outlet (15) being disposed on the filter housing (11), and a water storage chamber (25) being provided in the housing container (13). which water storage chamber (25) communicates correspondingly with a water outlet (16),
- a cylindrical filter element (17), which is incorporated in such a manner into the filter housing (11) that an unfiltered side (19), which communicates correspondingly with the fuel inlet (14), is separated in sealing manner from a filtered side (20), which communicates correspondingly with the fuel outlet (15),
- a water draining device (27), with which the water outlet (16) in the housing container (13) can be opened mechanically from externally via an actuating member (29),
**characterised in that** the actuating member (29) communicates correspondingly on the one side with the filter head (12) and on the other side with the water outlet (16).

2. Fuel filter (10) according to claim 1, **characterised in that** a water sensor (24) is disposed in the filter housing (11).

3. Fuel filter (10) according to one of claims 1 or 2, **characterised in that** the actuating member (29) extends through a filter interior (22), which Is formed by the cylindrical filter element (17).

4. Fuel filter (10) according to one of the preceding claims, **characterised in that** the water outlet (16) can be opened by means of an axial movement of the actuating member (29).

5. Fuel filter (10) according to claim 4, **characterised in that** the water outlet (16) can be opened by means of pulling on the actuating member (29).

6. Fuel filter (10) according to claim 4 or 5, **characterised in that** the axial movement of the actuating member (29) is created by means of a gear unit (23).

7. Fuel filter (10) according to claim 6, **characterised in that** the gear unit (23) is lockable.

8. Fuel filter (10) according to one of the preceding claims, **characterised in that** the water outlet (16) can be automatically opened and closed, wherein the water draining device (27) is controlled.

## Revendications

1. Filtre à carburant (10), en particulier pour carburant Diesel, présentant :
- un boîtier de filtre (11) avec une tête de filtre (12) et un godet de boîtier (13), boîtier de filtre (11) dans lequel une entrée de carburant (14) et une sortie de carburant (15) sont disposées, et dans lequel est prévu à l'intérieur du godet (13) une chambre d'accumulation d'eau (25), en communication correspondante avec une évacuation d'eau (16),
- un élément de filtre cylindrique (17), installé dans le boîtier de filtre (11) de telle façon qu'un côté brut (19), en communication correspondante avec l'entrée de carburant (14), soit séparé de façon étanche d'un côté propre (20), en communication correspondante avec la sortie de carburant (15),
- un dispositif d'évacuation d'eau (27), avec lequel l'évacuation d'eau (16) dans le godet de boîtier (13) peut être ouverte mécaniquement de l'extérieur à l'aide d'un élément de commande (29),
**caractérisé en ce que**
l'élément de commande (29) est en communication correspondante d'une part avec la tête de filtre (12) et d'autre part avec l'évacuation d'eau (16).

2. Filtre à carburant (10) selon la revendication 1,
**caractérisé en ce qu'**
un détecteur d'eau (24) est disposé dans le boîtier de filtre (11).

3. Filtre à carburant (10) selon l'une quelconque des revendications 1 ou 2,
**caractérisé en ce que**
l'élément de commande (29) passe à travers un espace intérieur de filtre (22) formé par l'élément de filtre cylindrique (17).

4. Filtre à carburant (10) selon l'une quelconque des revendications précédentes,
**caractérisé en ce que**
l'évacuation d'eau (16) peut être ouverte par un mouvement axial de l'élément de commande (29).

5. Filtre à carburant (10) selon la revendication 4,
**caractérisé en ce que**
l'évacuation d'eau (16) peut être ouverte en tirant l'élément de commande (29).

6. Filtre à carburant (10) selon la revendication 4 ou 5,
**caractérisé en ce que**
le mouvement axial de l'élément de commande (29) est produit par un engrenage (23).

7. Filtre à carburant (10) selon la revendication 6,
**caractérisé en ce que**
l'engrenage (23) peut être verrouillé.

8. Filtre à carburant (10) selon l'une quelconque des revendications précédentes,
**caractérisé en ce que**
l'évacuation d'eau (16) peut être ouverte ou fermée automatiquement, et le dispositif d'évacuation d'eau (27) est commandé.
